(19) Europäisches Patentamt / European Patent Office / Office européen des brevets

(11) **EP 2 337 930 B1**

(12) **EUROPÄISCHE PATENTSCHRIFT**

(45) Veröffentlichungstag und Bekanntmachung des Hinweises auf die Patenterteilung:
**17.08.2016 Patentblatt 2016/33**

(21) Anmeldenummer: **09736219.8**

(22) Anmeldetag: **15.10.2009**

(51) Int Cl.:
***F01D 17/02*** *(2006.01)*

(86) Internationale Anmeldenummer:
**PCT/EP2009/063475**

(87) Internationale Veröffentlichungsnummer:
**WO 2010/046299 (29.04.2010 Gazette 2010/17)**

(54) **TURBINENSCHAUFELBLATT UND TURBINENSCHAUFEL FÜR EINE TURBINE SOWIE VERFAHREN ZUR DIREKTEN BESTIMMUNG DES EROSIONSFORTSCHRITTS EINES TURBINENSCHAUFELBLATTES**

AIRFOIL AND BLADE FOR A TURBINE, AND METHOD FOR DIRECTLY DETERMINING THE PROGRESS OF EROSION OF A TURBINE BLADE AIRFOIL

CORPS D'AUBE DE TURBINE ET AUBE POUR UNE TURBINE, ET PROCÉDÉ DE DÉTERMINATION DIRECTE DE LA PROGRESSION DE L'ÉROSION SUBIE PAR UN CORPS D'AUBE DE TURBINE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **20.10.2008 DE 102008052380**

(43) Veröffentlichungstag der Anmeldung:
**29.06.2011 Patentblatt 2011/26**

(73) Patentinhaber: **Siemens Aktiengesellschaft**
**80333 München (DE)**

(72) Erfinder:
• **BEHNISCH, Thomas**
 **01309 Dresden (DE)**
• **BERNDT, Anett**
 **91058 Erlangen (DE)**
• **EBERT, Christoph**
 **01277 Dresden (DE)**
• **FÜSSEL, René**
 **01127 Dresden (DE)**
• **HUFENBACH, Werner**
 **01324 Dresden (DE)**
• **LANGKAMP, Albert**
 **01324 Dresden (DE)**
• **MANTEI, Markus**
 **01896 Pulsnitz**
 **OT Friedersdorf (DE)**
• **ZEININGER, Heinrich**
 **90587 Obermichelbach (DE)**

(56) Entgegenhaltungen:
**EP-A1- 1 956 193     WO-A1-2009/063181**
**WO-A2-2006/121570     DE-B3-102007 014 696**
**FR-A5- 2 074 077     US-A- 4 655 077**
**US-A1- 2007 139 193**

## Beschreibung

Die vorliegende Erfindung betrifft ein Turbinenschaufelblatt einer Turbinenschaufel für eine Turbine sowie eine Turbinenschaufel, insbesondere eine Endstufenturbinenschaufel, für eine Turbine, aufweisend mehrere Turbinenschaufelblätter. Ferner betrifft die Erfindung ein Verfahren zur direkten Bestimmung des Erosionsfortschritts eines Turbinenschaufelblattes.

Die letzte Stufe einer Kondensationsdampfturbine ist bei der Auslegung der Turbine meist das begrenzende Bauteil bzgl. der maximalen Durchströmfläche bzw. der maximalen Drehzahl, da die Zentrifugalkräfte/Fliehkräfte zu hohen Spannungen führen. Der Einsatz von Turbinenschaufeln bzw. Turbinenschaufelblättern aus einem Verbundwerkstoff, wie einem Faserverbundwerkstoff, insbesondere einem kohlefaserverstärkten Faserverbundwerkstoff oder einem Kunststoff, wirkt sich durch die deutlich geringere Masse derartig ausgebildeter Turbinenschaufeln bzw. Turbinenschaufelblätter vorteilhaft aus.

Problematisch ist dabei jedoch die Tropfenschlagerosionsbeanspruchung, die selbst gehärteten Stahl abträgt. Verbundwerkstoffe, wie Faserverbundwerkstoffe, sind im Vergleich zu gehärtetem Stahl weniger schlagfest. Ferner steigen mit einem angestrebten höheren Produkt aus Abströmfläche und Drehzahl die Umfangsgeschwindigkeit und damit die Erosionsbelastung einer Turbinenschaufel bzw. der Turbinenschaufelblätter. Da Dampfturbinen unter Umständen sehr lange Wartungsintervalle haben, ist der Einsatz von Verbundwerkstoffen, wie Faserverbundwerkstoffen, insbesondere kohlefaserverstärkten Faserverbundwerkstoffen oder Kunststoffen, risikobehaftet und kann zum Ausfall der Dampfturbine führen.

Derzeit werden in Dampfturbinen noch keine Turbinenschaufeln bzw. Turbinenschaufelblätter aus Verbundwerkstoffen bzw. Faserverbundwerkstoffen eingesetzt, sondern Turbinenschaufeln bzw. Turbinenschaufelblätter aus Stahl bzw. Titan.
Aus der DE 102 55 009 A1 ist eine Schwingungsdämpfungsvorrichtung sowie ein Verfahren zur aktiven Dämpfung von Schwingungen eines Bauteils, insbesondere einer Turbinenschaufel, bekannt. Dort ist bekannt, dass ein Piezo-Element an einer Turbinenschaufel angebracht wird und mit einer Schutzschicht versehen wird. So können Piezo-Elemente an der Saugseite eines Turbinenschaufelblattes angeordnet sein, so dass diese erosionsgeschützt angeordnet sind. Das Piezo-Element ist mit einer elektronischen Schaltung verbunden, welche zur Aufnahme der bei einer Schwingung der Turbinenschaufel durch die Verformung des als Sensors wirkenden Piezo-Elementes induzierten Stroms zur Verarbeitung des Stromsignals und zur Zurückleitung eines phasenversetzten Stroms an das Piezo-Element ausgebildet ist. Durch eine derartige Schwingungsdämpfung können Gegenkräfte auf das Bauteil, beispielsweise auf die Turbinenschaufel, aufgebracht werden, um einer Verformung des Bauteils durch die auftretenden, induzierten Schwingungen entgegenzuwirken.

Nachteilig bei einer derartigen Schwingungsdämpfung ist, dass diese keine Rückschlüsse auf den Erosionszustand des Bauteils zulässt. Die Anbringung der Piezo-Elemente an der Turbinenschaufel hat den Nachteil, dass diese beim Betrieb einer Turbine schnell durch die Tropfenschlagbeanspruchung beschädigt werden und dadurch nicht dauerhaft Messergebnisse liefern können.

WO 2006/121570 A2 offenbart das Einbringen eines Sensorelements in ein Turbinenschaufelblatt zum Erfassen von Betriebsparametern.

EP 1 956 193 A1 offenbart ein Bauteil mit einer Leiterbahn aus Indium und Zinn sowie die Verwendung von Indium-Zinnoxid als Verschleißindikator.

US 2007/0139193 A1 offenbart ein kabelloses Überwachungssystem.

US 4 655 077 A offenbart einen Verschleißsensor für ein Hochtemperaturventil.

Die Aufgabe der Erfindung besteht darin, den Bauteilzustand, insbesondere den Erosionszustand, von Turbinenschaufeln bzw. Turbinenschaufelblättern dauerhaft und sicher während des Betriebes einer Turbine festzustellen und somit Rückschlüsse über die Haltbarkeit der Turbinenschaufeln bzw. Turbinenschaufelblätter ziehen zu können.

Diese Aufgabe wird erfindungsgemäß durch ein Turbinenschaufelblatt einer Turbinenschaufel mit den Merkmalen gemäß dem unabhängigen Patentanspruch 1, durch eine Turbinenschaufel mit den Merkmalen gemäß dem abhängigen Patentanspruch 12 sowie durch Verfahren zur direkten Bestimmung des Erosionsfortschritts eines Turbinenschaufelblattes einer Turbinenschaufel mit den Merkmalen gemäß den unabhängigen Patentansprüchen 12-18 und 20 gelöst. Weitere Merkmale und Details der Erfindung ergeben sich aus den Unteransprüchen, der Beschreibung sowie den Zeichnungen. Dabei gelten Merkmale und Details, die im Zusammenhang mit dem erfindungsgemäßen Turbinenschaufelblatt einer Turbinenschaufel beschrieben sind, selbstverständlich auch im Zusammenhang mit der erfindungsgemäßen Turbinenschaufel bzw. den erfindungsgemäßen Verfahren zur direkten Bestimmung des Erosionsfortschritts eines Turbinenschaufelblattes einer Turbinenschaufel, und jeweils umgekehrt, so dass bezüglich der Offenbarung zu den einzelnen Erfindungsaspekten stets wechselseitig Bezug genommen wird.

Gemäß dem ersten Aspekt der Erfindung wird die Aufgabe durch ein Turbinenschaufelblatt einer Turbinenschaufel für eine Turbine, bei dem in dem Turbinenschaufelblattwerkstoff des Turbinenschaufelblattes wenigstens ein Sensorelement zur direkten Bestimmung des Erosionsfortschritts des Turbinenschaufelblattes integriert ist, gelöst.

Kern der Erfindung ist, dass ein Sensorelement vorgesehen ist, durch das der Erosionsfortschritt eines Turbinenschaufelblattes bestimmt werden kann, und zwar dauerhaft während des Betriebes der Turbinenschaufel in einer Turbine. Hierzu ist das Sensorelement direkt in den Turbinenschaufelblattwerkstoff des Turbinenschaufelblattes integriert. D.h., das Sensorelement wird beim Herstellungsvorgang direkt in den Werkstoff des Turbinenschaufelblattes implementiert, so dass dieser allseitig durch den Werkstoff umgeben ist. Bevorzugt wird das Sensorelement dabei nahe des durch Tropfenschlag beanspruchten Bereichs bzw. des erosionsbeanspruchten Bereichs des Turbinenschaufelblattes in das Turbinenschaufelblatt integriert. Aus den durch das Sensorelement gemessenen Messwerten können direkt Rückschlüsse auf den Erosionszustand des Turbinenschaufelblattes gezogen werden. Selbstverständlich können auch mehrere Sensorelemente bei der Fertigung eines Turbinenschaufelblattes in den Turbinenschaufelblattwerkstoff des Turbinenschaufelblattes integriert werden. So kann das Sensorelement beispielsweise vor dem Eingießen des Werkstoffes in der Gießform platziert werden, um nach dem Eingießen des Werkstoffes von diesem vollständig umgeben zu sein.

Das Sensorelement kann zur Energieversorgung einen Akkumulator aufweisen. Das wenigstens eine Sensorelement ist dabei über eine Kabelverbindung oder kabellos mit einer Anzeigeeinheit zur Anzeige der Messwerte des Sensorelementes verbunden. Bevorzugt ist das Sensorelement ein Bestandteil einer Einrichtung zur direkten Bestimmung des Erosionsfortschritts des Turbinenschaufelblattes. Die Einrichtung weist vorteilhafterweise ein Spannungsversorgung, eine Anzeigeeinheit, eine elektronische Schaltung, eine Speichereinheit, eine Rechnereinheit, eine Vergleichseinrichtung und/oder eine Ausleseeinrichtung auf. Dabei kann das wenigstens eine Sensorelement über eine Kabelverbindung oder kabellos mit der Einrichtung zur direkten Bestimmung des Erosionsfortschritts des Turbinenschaufelblattes verbunden sein.

Ein derartiges Turbinenschaufelblatt ermöglicht die direkte Bestimmung des Erosionsfortschritts an einem Turbinenschaufelblatt einer Turbinenschaufel und zwar dauerhaft während des Betriebs der Turbinenschaufel. Direkte Bestimmung bedeutet in Sinne der Erfindung, dass der Erosionsfortschritt ohne Umrechnung der Messwerte bzw. durch ein einfaches Inbeziehungsetzen der Messwerte zu Referenzmesswerten bestimmt werden kann. Ausgehend von einem Referenzmesswert im Normalzustand des Turbinenschaufelblattes lassen die während des Einsatzes des Turbinenschaufelblattes durch das Sensorelement gemessen Messwerte direkt einen Rückschluss auf den Fortschritt der Erosion an dem Turbinenschaufelblatt zu. Mit zunehmender Erosion der durch Tropfenschlag beanspruchten Bereiche des Turbinenschaufelblattes ändern sich die gemessenen Messwerte. Hierdurch ist direkt ein Rückschluss auf den Erosionsfortschritts des Turbinenschaufelblattes möglich. Beispielsweise können die gemessenen Sensorwerte mit Vergleichswerten bzw. Referenzmesswerten verglichen werden. So kann einfach und zuverlässig festgestellt werden, wann beispielsweise ein kritischer Grenzwert der Erosionsabtragung erreicht ist.

Die Einrichtung bzw. Teile der Einrichtung zur direkten Bestimmung des Erosionsfortschritts des Turbinenschaufelblattes können ebenfalls in dem Turbinenschaufelwerkstoff der Turbinenschaufel integriert sein. Diese sind bevorzugt an nicht erosionsbeanspruchten Bereichen des Turbinenschaufelblattes in diesem implementiert. Vorteilhafterweise können diese Teile alternativ in den Turbinenschaufelfuß einer Turbinenschaufel integriert werden.

Das wenigstens eine Sensorelement kann verschiedenartig ausgebildet sein und entsprechend können unterschiedliche Messgrößen erfasst werden. Das Sensorelement kann beispielsweise als elektrischer Leiter ausgebildet sein bzw. einen elektrischen Leiter aufweisen.

Eine erste Ausführungsvariante des Turbinenschaufelblattes sieht vor, dass das Sensorelement zur Bestimmung des elektrischen Widerstandes des integrierten Sensorelementes bzw. eines Leiters des integrierten Sensorelementes ausgebildet ist. Eine Veränderung des Turbinenschaufelblattes, d.h. ein Verformung, beispielsweise eine Stauchung, eine Dehnung oder ein Abtrag eines Bereiches des Turbinenschaufelblattes, führt zu einer Änderung des Sensorelementes bzw. des Leiters des Sensorelementes und somit zu einer Änderung des elektrischen Widerstandes eines derartigen Sensorelementes. Ausgehend von einem elektrischen Referenzwiderstandswert im Normalzustand des Turbinenschaufelblattes können Rückschlüsse auf den Erosionsfortschritt an den durch Tropfenschlag beanspruchten Bereichen des Turbinenschaufelblattes gezogen werden. Als Sensorelement kann beispielsweise ein Dehnmessstreifen eingesetzt werden. Dehnmessstreifen ändern schon bei geringer Verformung ihren elektrischen Widerstand. Das Sensorelement kann auch andere leitende Drähte, wie Kupferdrähte, deren elektrische Widerstände sich bei geringer Verformung ändern, aufweisen. Zur Messung des elektrischen Widerstandes eines derartigen Sensorelementes weist die Einrichtung zur direkten Bestimmung des Erosionsfortschritts des Turbinenschaufelblattes als elektrische Schaltung bevorzugt eine Brückenschaltung auf. Die ermittelten elektrischen Widerstände können mit dem Referenzwiderstandswert im Normalzustand des Turbinenschaufelblattes verglichen werden. Das Ergebnis des Vergleichs liefert direkt Rückschlüsse auf den Erosionszustand des Turbinenschaufelblattes. Ist der erosionsbeanspruchte Bereich des Turbinenschaufelblattes bis zum Sensorelement abgetragen, treffen Wassertropfen direkt auf das Sensorelement. Durch die auftreffenden Wassertropfen wird das Sensorelement, insbesondere ein Dehnmessstreifen oder ein leitender Draht, gebrückt, so dass sich der Widerstand schlagartig signifikant ändert. Somit kann die Abtragstärke zu diesem Zeitpunkt genau bestimmt werden, da der Abstand zu dem Sensorelement bekannt ist.

In einer zweiten bevorzugten Ausführungsform des Turbinenschaufelblattes ist vorgesehen, dass das Sensorelement zur Aussendung und zum Empfang von Schallwellen zur Bestimmung des Abstandes des Sensorelementes zur Oberfläche des Turbinenschaufelblattes ausgebildet ist. Das Sensorelement sendet wiederholt Schallwellen in Richtung des erosionsbeanspruchten Bereiches des Turbinenschaufelblattes aus. Diese werden an der Oberfläche, d.h. der Außenseite, des Turbinenschaufelblattes reflektiert und zurück zu dem Sensorelement geführt. Anhand der Laufzeit der Schallwelle vom Zeitpunkt des Aussendens bis zum Zeitpunkt des Empfanges durch das Sensorelement kann direkt ein Rückschluss auf die Strecke, die die Schallwelle zurückgelegt hat, gezogen werden. Dies gibt wiederum Aufschluss auf die Größe der durch die Tropfenschlagerosionsbeanspruchung abgetragenen Volumens des Turbinenschaufelblattes. Im Normalzustand des Turbinenschaufelblattes ist die Strecke zwischen dem Sensorelement und der Außenseite des Turbinenschaufelblattes bekannt. Ferner kann durch das Aussenden einer Schallwelle durch das Sensorelement die Zeit erfasst werden, die die Schallwelle braucht, um zu dem Sensorelement zurückzugelangen. Aufbauend auf diesen Referenzwerten für die Strecke und die Zeit der Schallwelle, die diese für die doppelte Strecke benötigt, können Rückschlüsse auf den Erosionsfortschritt gezogen werden, wenn während des Betriebes der Turbine die Zeitspanne einer Schallwelle vom Aussenden bis zum Empfang durch das Sensorelement abnimmt. Die sinkende Zeit ist ein direkter Parameter für die kürzer werdende Strecke zwischen dem Sensorelement und der Außenseite des Turbinenschaufelblattes. Ist ein Teil der Außenseite des Turbinenschaufelblattes durch die Tropfenschlagbeanspruchung abgetragen, so kann die Länge der übrig gebliebenen Strecke zwischen dem Sensorelement und der Außenseite des Turbinenschaufelblattes durch die ermittelte Zeitspanne der Schallwelle ermittelt werden. Eine aktuelle Strecke zwischen der Außenseite des Turbinenschaufelblattes und dem Sensorelement kann durch die Gleichung: aktuelle Strecke = Referenzstrecke im Normalzustand dividiert durch die Zeit der Schallwelle im Normalzustand und multipliziert mit der aktuell gemessenen Zeit für die Schallwelle ermittelt werden. Ein derartiges Sensorelement gibt sehr schnell und einfach Rückschluss über die verbleibende Stärke eines Turbinenschaufelblattes. Das Sensorelement muss nur in der Lage sein, Schallwellen auszusenden und wieder zu empfangen und die Zeit einer Schallwelle, die sie zwischen dem Aussenden und dem Empfang braucht, zu messen.

Alternativ bevorzugt ist ein Turbinenschaufelblatt., bei dem das Sensorelement zur Bestimmung der Amplitude einer durch einen Tropfenschlag induzierten Stoßwelle ausgebildet ist. Bei dieser dritten Ausführungsvariante des Turbinenschaufelblattes ist das Sensorelement derart ausgebildet, dass es die Amplitude einer durch einen Tropfenschlag ausgelösten Stoßwelle ermitteln kann. Die Amplitude einer Stoßwelle ist ein Maß für den Abstand des Sensorelementes zu der Außenseite des Turbinenschaufelblattes. Je größer der Abstand zwischen dem Sensorelement und der Außenseite des Turbinenschaufelblattes ist, desto geringer ist die Amplitude der durch einen Tropfenschlag induzierten Stoßwelle an dem Sensorelement. Wird aufgrund der Tropfenschlagerosionsbeanspruchung ein Teil der Außenseite des Turbinenschaufelblattes abgetragen, so ist der Abstand zwischen der Außenseite des Turbinenschaufelblattes und dem Sensorelement geringer. Je geringer dieser Abstand ist, desto größer ist die Amplitude einer induzierten Stoßwelle an dem Sensorelement. D.h., die gemessene Amplitude einer Stoßwelle ist ein direktes Maß für den Abstand des Sensorelementes zu der Außenseite des erosionsbeanspruchten Turbinenschaufelblattes. Auch hier kann eine während des Betriebes einer Turbine gemessene Amplitude mit einem Referenzamplitudenwert, der im Normalzustand des Turbinenschaufelblattes ermittelt wird, verglichen werden.

Eine vierte bevorzugte Ausführungsvariante eines Turbinenschaufelblattes sieht vor, dass das Sensorelement zur Bestimmung der aus der Zentrifugallast resultierenden Kraft und deren Richtung ausgebildet ist. Das integrierte Sensorelement ermittelt die Zentrifugalkraft und deren Richtung, die auf das Turbinenschaufelblatt und das Sensorelement bei einer Drehung des Turbinenschaufelblattes wirkt. Die Zentrifugalkraft, auch als Fliehkraft bezeichnet, stellt eine Trägheitskraft dar, die aufgrund der Trägheit und der Masse des Turbinenschaufelblattes und des Sensorelementes auf diese, bei einer Bewegung des Turbinenschaufelblattes und des Sensorelementes, wirkt. Die Zentrifugalkraft kann aus der Masse des bewegten Turbinenschaufelblattes und des Sensorelementes, der Geschwindigkeit des bewegten Turbinenschaufelblattes und des Sensorelementes und des Radius der Kreisbahn, auf der sich das Sensorelement bewegt, gemessen werden. Werden Teile oder ein Bereich des Turbinenschaufelblattes aufgrund einer Tropfenschlagerosionsbeanspruchung abgetragen und kommt es aufgrund der Veränderung der Verteilung der Masse des Turbinenschaufelblattes zu einer Verdrehung des Turbinenschaufelblattes sowie des in dem Turbinenschaufelblattwerkstoff integrierten Sensorelementes, so ändert sich auch die Stärke und die Richtung der Zentrifugalkraft, die auf das Sensorelement wirkt. Diese veränderte Zentrifugalkraft wird von dem Sensorelement ermittelt und ist ein Indiz für die Größe der Erosion an dem durch Tropfenschlag beanspruchten Bereich des Turbinenschaufelblattes. Insbesondere durch die Veränderung der Masse des Turbinenschaufelblattes ändert sich die Zentrifugallast, die an dem Sensorelement angreift. Durch Vergleich der aktuell erfassten Zentrifugalkraft und deren Richtung mit Ausgangsreferenzwerten kann einfach und präzise eine Aussage über den Zustand des Turbinenschaufelblattes an dem durch Tropfenschlag beanspruchten Bereich getätigt werden. Zunächst wird durch das Sensorelement die auf das Sensorelement wirkende Zentrifugallast bestimmt, wenn das Turbinenschaufelblatt seinen Normalzustand aufweist. Die durch die Tropfenschlagerosionsbeanspruchung entstehende Erosion führt zu einer Schaufelverdrehung und damit zu einer Verdrehung des Sensorelementes. Dadurch ändern sich die Stärke und der Winkel der Kraftresultierenden der Zentrifugallast. Aufgrund der Winkeländerung und der gemessenen Kraft der Kraftresultierenden im Vergleich zu den Referenzwerten im Normalzustand des Turbinenschaufelblattes kann ein Rückschluss auf die Verformung bzw. die Form des Turbinenschaufelblattes gemacht werden.

Eine fünfte bevorzugte Ausführungsvariante des Turbinenschäufelblattes sieht vor, dass das Sensorelement einen Aktor und einen Sensor zur Bestimmung der Amplituden und der Frequenzen lokaler Schwingungsmodi bzw. ausgesendeter Schallwellen zwischen dem Aktor und dem Sensor aufweist. Aktor und Sensor des Sensorelementes werden beabstandet zueinander in den Turbinenschaufelblattwerkstoff, nahe des durch Tropfenschlag beanspruchten Bereiches des Turbinenschaufelblattes in diesem, integriert. Der Sensor misst die Amplitude und die Frequenz einer von dem Aktor ausgesendeten Welle. So kann als Referenzamplituden- und Frequenzwert die Amplitude und die Frequenz eine Welle ermittelt werden, wenn das Turbinenschaufelblatt im Normalzustand ist. Ändert sich die Masse und die Form des Turbinenschaufelblattes nach eine Beanspruchung durch Tropfenschlag, so verändert sich auch die Amplitude und die Frequenz einer von dem Aktor ausgesendeten Welle. Der Aktor kann beispielsweise akustische oder elektromagnetische Wellen aussenden. Ist die Außenseite des Turbinenschaufelblattes aufgrund einer Erosion näher an dem Sensorelement, d.h. dem Aktor und dem Sensor, angeordnet, so ändert sich der lokale Schwingungsmodus der ausgesendeten Welle. Diese Veränderung ist ein Indiz für die Veränderung des Turbinenschaufelblattes. So nehmen beispielsweise mit abnehmender Dicke des Turbinenschaufelblattes die Amplitude und die Frequenz der ausgesendeten Welle ab.

Eine sechste bevorzugte Ausführungsvariante des Turbinenschaufelblattes sieht vor, dass das Sensorelement zur Bestimmung der Eigenschwingungsfrequenzen des Turbinenschaufelblattes ausgebildet ist. Ein Turbinenschaufelblatt wird bei einer speziellen Drehzahl der Turbinenschaufel zu einer bestimmten Eigenschwingung bzw. zu bestimmten Eigenschwingungsformen angeregt. Die Frequenz der Eigenschwingung ändert sich durch den Erosionsfortschritt. Durch eine wiederholte Messung der Eigenschwingungsfrequenz des Turbinenschaufelblattes und eines Vergleiches der gemessenen Eigenschwingungsfrequenzen mit Eigenschwingungsfrequenz, die im Normalzustand des Turbinenschaufelblattes ermittelt wurden, können Rückschlüsse auf den Erosionsfortschritt an dem Turbinenschaufelblatt gezogen werden. Die verringerte Masse eines Turbinenschaufelblattes aufgrund einer Erosion ändert die Schwerpunktlage des Turbinenschaufelblattes. Dies führt zu veränderten Schwingformen des Turbinenschaufelblattes und zu einer Verschiebung der Eigenfrequenzen, die durch das Sensorelement detektiert werden können. Zur Bestimmung der Eigenschwingungsfrequenzen ist kein Aktor bzw. Aktuator erforderlich.

Das Sensorelement wird bei der Herstellung des Turbinenschaufelblattes direkt in den Turbinenschaufelblattwerkstoff integriert. Dies kann beispielsweise durch ein Gießverfahren erfolgen. Hierbei wird das Sensorelement in der Gießform platziert und von dem einfließenden Turbinenschaufelblattwerkstoff, beispielsweise einem Kunststoff, vollständig umgeben. Bevorzugt ist des Weiteren ein Turbinenschaufelblatt, bei dem der Turbinenschaufelblattwerkstoff als Verbundwerkstoff, insbesondere als ein Faserverbundwerkstoff, ausgebildet ist. Ein Verbundwerkstoff ist ein Werkstoff aus zwei oder mehr verbundenen Materialien. Durch die Verwendung von zwei oder mehr Materialien können Verbundwerkstoffe eine sehr hohe Festigkeit aufweisen. Gleichzeitig kann das Gewicht eines Turbinenschaufelblattes aus einem Verbundwerkstoff im Vergleich zu einem Turbinenschaufelblatt aus Stahl gering gehalten werden.

So kann der Turbinenschaufelblattwerkstoff beispielsweise als ein kohlenstofffaserverstärkter Kunststoff (CFK) ausgebildet sein. Bei einem derartigen Werkstoff sind in den Kunststoff Kohlenstofffasern als Verstärkung eingebettet. Ferner kann der Turbinenschaufelblattwerkstoff als ein keramischer Faserverbundwerkstoff ausgebildet sein. Ein Faserverbundwerkstoff besteht aus Verstärkungsfasern und einer Kunststoffmatrix, wobei die Kunststoffmatrix die Fasern umgibt. Diese sind durch Adhäsiv- oder Kohäsivkräfte an die Kunststoffmatrix gebunden. Durch die Verwendung von Fasern weisen Faserverbundwerkstoffe ein richtungsunabhängiges Elastizitätsverhalten auf. Derartige Faserverbundwerkstoffe weisen hohe Steifigkeiten und Festigkeiten auf und sind daher für den Einsatz als Turbinenschaufelblatt geeignet. Durch das zumindest eine integrierte Sensorelement kann die Haltbarkeit bzw. der Erosionsfortschritt eines derartig ausgebildeten Turbinenschaufelblattes während eines Betriebes in einer Turbine einfach und sicher bestimmt werden. Eine weitere Möglichkeit sieht vor, dass der Turbinenschaufelblattwerkstoff Holz, eine Paste oder ähnliche Materialien aufweist.

Eine weitere bevorzugte Ausführung des Turbinenschaufelblattes sieht vor, dass das Sensorelement wenigstens einen Piezosensor, wenigstens einen Dehnmessstreifen oder wenigstens einen leitfähigen Draht, insbesondere einen Kupferdraht, aufweist.

Ein Piezosensor bzw. ein piezoelektrischer Sensor ist ein universelles Sensorelement, das Messgrößen wie eine Spannung, einen Druck, eine Kraft oder eine Beschleunigung erfassen kann. Dehnmessstreifen ändern bereits bei einer geringen Verformung ihren elektrischen Widerstand. Kommt es aufgrund eines Tropfenschlages zu einer Verformung des Turbinenschaufelblattes, verformt sich auch der Dehnmessstreifen und der elektrische Widerstand verändert sich. Der veränderte elektrische Widerstandswert ist somit ein Maß für die Verformung des Turbinenschaufelblattes. Ferner können andere leitfähige Drähte, insbesondere Kupferdrähte, als Teil des Sensorelementes eingesetzt werden. Durch das Sensorelement ist ein frühzeitiges Erkennen von Schäden an einem Turbinenschaufelblatt möglich.

Das Sensorelement bzw. der Dehnmessstreifen oder der leitfähige Draht des Sensorelementes ist vorteilhafterweise meanderförmig ausgebildet. Hierdurch kann das Sensorelement über einen größeren Bereich in dem Turbinenschaufelblattwerkstoff angeordnet sein. Bevorzugt ist der meanderförmig ausgebildete Dehnmessstreifen bzw. der meanderförmig ausgebildete Draht versetzt zur Außenseite des durch Tropfenschlag beanspruchten Bereiches in dem Turbinenschaufelblattwerkstoff angeordnet. Es sind je nach Ausgestaltung des Turbinenschaufelblattes selbstverständlich auch andere Formen des Dehnmessstreifens bzw. des leitfähigen Drahtes möglich.

Gemäß des zweiten Aspektes der Erfindung werden die Aufgaben durch eine Turbinenschaufel, insbesondere eine Endstufendampfturbinenschaufel, für eine Turbine, aufweisend mehrere Turbinenschaufelblätter, gelöst, wobei wenigstens zwei der Turbinenschaufelblätter gemäß einer Ausführungsvariante des ersten Aspektes der Erfindung ausgebildet sind und wobei eine Vergleichseinrichtung zum Vergleich der Erosionsfortschritte der wenigstens zwei Turbinenschaufelblätter vorgesehen ist. Dadurch, dass wenigstens zwei Turbinenschaufelblätter mit jeweils zumindest einem Sensorelement ausgebildet sind, kann über die Vergleichseinrichtung ein Rückschluss auf die Verformung aller Turbinenschaufelblätter der Turbinenschaufel gezogen werden. Als Turbinenschaufel wird im Sinne der Erfindung eine gesamte Einheit mit einer Vielzahl von Turbinenschaufelblättern verstanden. Sind ein Teil der Turbinenschaufelblätter mit Sensorelementen versehen, können durch die Messergebnisse dieser Sensorelemente Rückschlüsse auf den Zustand der Turbinenschaufelblätter, die keine Sensorelemente aufweisen, gezogen werden. Die Vergleichseinrichtung ermöglicht beispielsweise die durchschnittliche Beschädigung aller Turbinenschaufelblätter zu ermitteln oder das Turbinenschaufelblatt zu ermitteln, an dem die Beschädigung am größten ist. Durch das Anbringen bzw. Integrieren von Sensorelementen in mehreren Turbinenschaufelblättern kann über die Differenz der Signale bzw. der gemessenen Werte ein Rückschluss auf den Zustand einzelner Turbinenschaufelblätter gezogen werden.

Gemäß dem dritten Aspekt der Erfindung wird die Aufgabe durch verschiedene Verfahren zur direkten Bestimmung des Erosionsfortschritts eines Turbinenschaufelblattes einer Turbinenschaufel gelöst.

Ein erstes Verfahren zur direkten Bestimmung des Erosionsfortschritts eines Turbinenschaufelblattes einer Turbinenschaufel, wobei das Turbinenschaufelblatt gemäß der ersten Ausführungsvariante des Turbinenschaufelblattes des ersten Aspektes der Erfindung ausgebildet ist, löst die Aufgabe dadurch, dass das Sensorelement wiederholt seinen elektrischen Widerstand bzw. den elektrischen Widerstand eines Leiters des integrierten Sensorelementes misst und dass die elektrischen Widerstände der wiederholten Messungen zur Bestimmung des Erosionsfortschritts des Turbinenschaufelblattes miteinander verglichen werden. Die Messungen des elektrischen Widerstandes können in regelmäßigen oder in unregelmäßigen Abständen wiederholt werden. Durch eine Vielzahl von Messungen kann der Erosionsfortschritt an dem Turbinenschaufelblatt festgestellt werden. Eine Verformung des Turbinenschaufelblattes aufgrund eines Tropfenschlages führt ebenfalls zu einer Verformung des Sensorelementes, wodurch sich der elektrische Widerstand des Sensorelementes ändert. Die gemessenen elektrischen Widerstände werden mit einem Referenzwiderstandswert, der ermittelt wird, wenn das Turbinenschaufelblatt seinen Normalzustand aufweist, verglichen. Das Ergebnis des Vergleichs der gemessenen elektrischen Widerstände mit dem Referenzwiderstandswert liefert direkt Rückschlüsse auf den Erosionszustand des Turbinenschaufelblattes.

Ein zweites Verfahren zur direkten Bestimmung des Erosionsfortschritts eines Turbinenschaufelblattes einer Turbinenschaufel, wobei das Turbinenschaufelblatt gemäß der zweiten Ausführungsvariante des Turbinenschaufelblattes des ersten Aspektes der Erfindung ausgebildet ist, löst die Aufgabe dadurch, dass das Sensorelement wiederholt Schallwellen aussendet und die Zeit misst, die eine jede ausgesendete Schallwelle, die an der Oberfläche des Turbinenschaufelblattes reflektiert wird, braucht, bis sie wieder von dem Sensorelement empfangen wird, dass die Abstände des Sensorelementes zu der Oberfläche des Turbinenschaufelblattes durch eine Multiplikation einer jeden gemessenen Zeit mit dem bekannten Abstand des Sensorelementes zu der Oberfläche des Turbinenschaufelblattes in einem Ausgangszustand des Turbinenschaufelblattes und durch eine Division der gemessenen Zeit, die die Schallwelle zwischen dem Aussenden und dem Empfang im Ausgangszustand des Turbinenschaufelblattes benötigt hat, ermittelt werden, und dass anhand der berechneten Abstände der Erosionsfortschritt des Turbinenschaufelblattes bestimmt wird. Zunächst erfasst das Sensorelement die Zeit die eine von ihm ausgesendete Schallwelle benötigt, bis sie wieder zu dem Sensorelement gelangt. Da die Distanz zwischen dem Sensorelement und der Außenseite des Turbinenschaufelblattes im Normalzustand des Turbinenschaufelblattes bekannt ist, kann auch eine Zeit für eine ausgesendete Schallwelle für diese Distanz ermittelt werden. Diese Distanz dient als Referenzstrecke, die ermittelte Zeit dient als Referenzzeit. Wird nun während des Betriebes der Turbine eine Schallwelle zu der Außenseite des Turbinenschaufelblattes gesendet und die Zeit ermittelt, bis diese Schallwelle zurück zum Sensorelement gelangt, kann anhand dieser ermittelten Zeit sowie der Referenzzeit und der Referenzstrecke die zurückgelegte Strecke der Schallwelle ermittelt werden. Aufgrund einer Erosion an der Außenseite des Turbinenschaufelblattes wird die Zeit, die die Schallwelle benötigt, geringer sein, als die Referenzzeit. Dementsprechend ist auch die Strecke geringer, als die Referenzstrecke. Der aktuelle Abstand des Sensorelementes zu der Oberfläche des Turbinenschaufelblattes wird dadurch berechnet, dass die ermittelte Zeit einer aktuell ausgesendeten Schallwelle mit der Referenzstrecke multipliziert wird und das Produkt aus dieser Multiplikation durch die Referenzzeit geteilt wird. Hierdurch wird sehr einfach der jeweils aktuelle Abstand des Sensorelementes zu der Oberfläche des Turbinenschaufelblattes ermittelt. Ist der Abstand des Sensorelementes zu der Oberfläche des Turbinenschaufelblattes bekannt, ist auch einfach ermittelbar, wie viel des Turbinenschaufelblattes aktuell durch die Erosionsbeanspruchung abgetragen worden ist.

Ein drittes Verfahren zur direkten Bestimmung des Erosionsfortschritts eines Turbinenschaufelblattes einer Turbinenschaufel, wobei das Turbinenschaufelblatt gemäß der dritten Ausführungsvariante des Turbinenschaufelblattes des ersten Aspektes der Erfindung ausgebildet ist, löst die Aufgabe dadurch, dass das Sensorelement wiederholt die Amplitude einer durch einen Tropfenschlag induzierten Stoßwelle ermittelt und dass anhand eines Vergleiches der ermittelten Amplituden der Erosionsfortschritt des Turbinenschaufelblattes bestimmt wird. Die Amplitude einer Stoßwelle ist ein Maß für den Abstand des Sensorelementes zu der Außenseite des Turbinenschaufelblattes. Da der Abstand des Sensorelementes zu der Außenseite des Turbinenschaufelblattes im Normalzustand des Turbinenschaufelblattes bekannt ist, kann auch ein Referenzamplitudenwert bei diesem Abstand ermittelt werden. Durch den Erosionsabtrag nimmt der Abstand der Außenseite des Turbinenschaufelblattes zu dem Sensorelement ab, so dass eine veränderte Amplitude beim Auftreten einer weiteren Stoßwelle durch das Sensorelement ermittelt wird. Aufgrund des geringer werdenden Abstandes nimmt der gemessene Amplitudenwert zu.

Ein viertes Verfahren zur direkten Bestimmung des Erosionsfortschritts eines Turbinenschaufelblattes einer Turbinenschaufel, wobei das Turbinenschaufelblatt gemäß der vierten Ausführungsvariante des Turbinenschaufelblattes des ersten Aspektes der Erfindung ausgebildet ist, löst die Aufgabe dadurch, dass das Sensorelement wiederholt die auf das Sensorelement wirkende Zentrifugallast misst und dass anhand jeder gemessenen Zentrifugallast die resultierende Kraft und deren Richtung ermittelt wird und dass durch einen Vergleich der ermittelten resultierenden Kräfte und deren Richtungen der Erosionsfortschritt des Turbinenschaufelblattes bestimmt wird. Dabei misst das Sensorelement die Masse des bewegten Turbinenschaufelblattes und die Geschwindigkeit mit der sich das Sensorelement bewegt. Ferner ist dem Sensorelement der Radius der Kreisbahn, auf der sich das Sensorelement bewegt bekannt. Bei einer Erosion eines Bereiches des Turbinenschaufelblattes verändert sich die Masse des Turbinenschaufelblattes beziehungsweise die Verteilung der Masse des Turbinenschaufelblattes. Dies führt dazu, dass sich die Stärke und die Richtung der Zentrifugalkraft, die auf das Sensorelement wirkt, verändert. Diese veränderte Zentrifugalkraft stellt ein Maß für die Größe der Erosion an dem durch Tropfenschlag beanspruchten Bereich des Turbinenschaufelblattes dar. Die Erosion an dem Turbinenschaufelblatt führt zu einer Schaufelverdrehung und zu einer Verdrehung des Sensorelementes. Dadurch ändern sich die Stärke und der Winkel der Kraftresultierenden der Zentrifugallast. Die permanent ermittelte Zentrifugalkraft und deren Richtung werden mit Ausgangsreferenzwerten verglichen. Hierdurch kann das Maß der Erosion an dem Turbinenschaufelblatt bestimmt werden. Aufgrund der Winkeländerung und der gemessenen Kraft der Kraftresultierenden im Vergleich zu den Ausgangsreferenzwerten im Normalzustand des Turbinenschaufelblattes kann ein Rückschluss auf die Verformung bzw. die Form des Turbinenschaufelblattes gemacht werden.

Ein fünftes Verfahren zur direkten Bestimmung des Erosionsfortschritts eines Turbinenschaufelblattes einer Turbinenschaufel, wobei das Turbinenschaufelblatt gemäß der fünften Ausführungsvariante des Turbinenschaufelblattes des ersten Aspektes der Erfindung ausgebildet ist, löst die Aufgabe dadurch, dass der Aktor des Sensorelementes wiederholt Schallwellen aussendet und dass der Sensor des Sensorelementes die Amplituden jeder Schallwelle und die Zeit zwischen dem Auftreffen zweier aufeinanderfolgender Schallwellen ermittelt und dass anhand eines Vergleiches der,wiederholt ermittelten Messdaten der Erosionsfortschritt des Turbinenschaufelblattes bestimmt wird. Dadurch, dass der Aktor und der Sensor des Sensorelementes beabstandet zueinander angeordnet werden, kann der Sensor eine von dem Aktor ausgesendete Welle, insbesondere eine akustische Welle, erfassen. Diese Welle weist einen bestimmten Schwingungsmodus auf. Ändert sich nun die Außenseite des Turbinenschaufelblattes hat dies einen Einfluss auf den Schwingungsmodus einer ausgesendeten Welle, insbesondere einer Schallwelle. Mit abnehmender Dicke des Turbinenschaufelblattes verändert sich beispielsweise die Amplitude der Schwingung der Welle dahingehend, dass diese einen zunehmend kleineren Wert aufweist. Die ermittelten Amplitudenwerte und die ermittelten Frequenzwerte der lokalen Schwingungsmodi werden mit den Referenzamplitudenwerten und Referenzfrequenzwerten verglichen, so dass eine Aussage über den Erosionszustand des Turbinenschaufelblattes getätigt werden kann.

Ein sechstes Verfahren zur direkten Bestimmung des Erosionsfortschritts eines Turbinenschaufelblattes einer Turbinenschaufel, wobei das Turbinenschaufelblatt gemäß der sechsten Ausführungsvariante des Turbinenschaufelblattes des ersten Aspektes der Erfindung ausgebildet ist, löst die Aufgabe dadurch, dass das Sensorelement die Eigenschwingungsfrequenzen des Turbinenschaufelblattes wiederholt misst und dass anhand eines Vergleiches der ermittelten Eigenschwingungsfrequenzen der Erosionsfortschritt des Turbinenschaufelblattes bestimmt wird. Die Messung der Eigenschwingungsfrequenzen des Turbinenschaufelblattes kann beispielsweise mittels eines Piezosensors oder eines Dehnmessstreifens gemessen werden. Durch Vergleich der gemessenen Eigenschwingungsfrequenzen mit Referenzeigenschwingungsfrequenzen kann der Erosionsfortschritt an dem Turbinenschaufelblatt ermittelt werden.

Bevorzugt ist ferner eines der zuvor aufgeführten Verfahren zur direkten Bestimmung des Erosionsfortschritts eines Turbinenschaufelblattes einer Turbinenschaufel, bei dem das Turbinenschaufelblatt gemäß dem ersten Aspekt der Erfindung ausgebildet ist.

Ferner ist ein Verfahren zur direkten Bestimmung des Erosionsfortschritts eines Turbinenschaufelblattes einer Turbinenschaufel bevorzugt, bei dem durch den Vergleich der Erosionsfortschritte wenigstens zweier Turbinenschaufelblätter Rückschlüsse auf den Erosionsfortschritt einzelner Turbinenschaufelblätter gemacht werden. So kann auch der Zustand eines Turbinenschaufelblattes geschätzt werden, welches keine Sensorelemente aufweist. Ferner sind Aussagen über den Gesamtzustand einer Turbinenschaufel möglich.

Die Erfindung wird nun anhand von Ausführungsbeispielen unter Bezugnahme auf die beiliegenden Zeichnungen näher erläutert. Es zeigen:

Figur 1      eine perspektivische Ansicht eines Turbinenschaufelblattes mit einem integrierten ersten Sensorelement;

Figur 2      eine Querschnittansicht des Turbinenschaufelblattes nach Figur 1;

Figur 3      eine Querschnittansicht eines Turbinenschaufelblattes mit einem integrierten zweiten Sensorelement;

Figur 4      eine vergrößerte Darstellung eines Ausschnittes eines Turbinenschaufelblattes nach Figur 3;

Figur 5      eine vergrößerte Darstellung eines Ausschnittes eines Turbinenschaufelblattes nach Figur 3;

Figur 6      eine Querschnittansicht eines Turbinenschaufelblattes mit einem integrierten dritten Sensorelement;

Figur 7      eine Querschnittansicht eines Turbinenschaufelblattes mit einem integrierten dritten Sensorelement;

Figur 8      eine perspektivische Ansicht eines Turbinenschaufelblattes mit einem integrierten vierten Sensorelement;

Figur 9      eine perspektivische Ansicht eines Turbinenschaufelblattes mit einem integrierten vierten Sensorelement;

Figur 10     eine Querschnittansicht eines Turbinenschaufelblattes mit einem integrierten fünften Sensorelement;

Figur 11     eine vergrößerte Darstellung eines Ausschnittes eines Turbinenschaufelblattes nach Figur 10;

Figur 12     eine vergrößerte Darstellung eines Ausschnittes eines Turbinenschaufelblattes nach Figur 10.

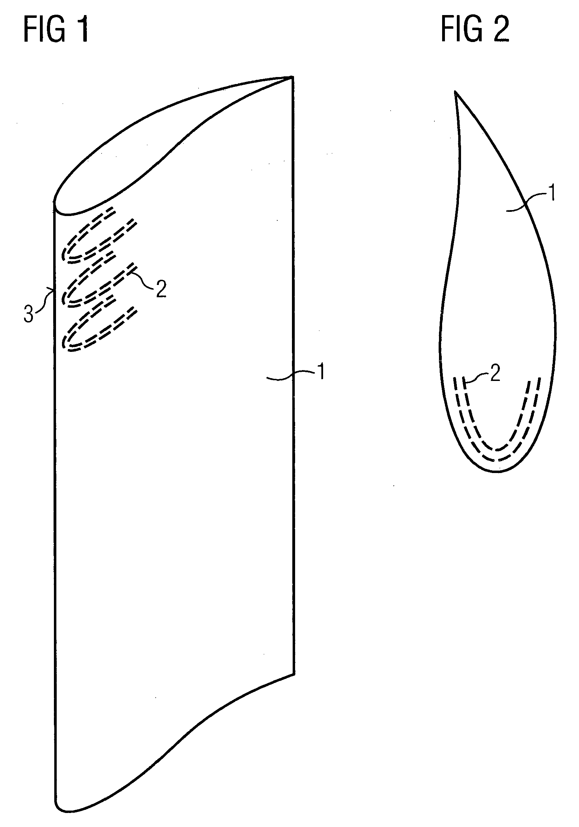

In der Fig. 1 ist eine perspektivische auf ein Turbinenschaufelblatt 1 gezeigt. In das Turbinenschaufelblatt 1 ist ein Sensorelement 2 integriert. D.h., das Sensorelement 2 ist in den Turbinenschaufelblattwerkstoff implementiert. In dieser Ausführungsvariante des Turbinenschaufelblattes 1 ist das Sensorelement 2 zur Bestimmung des elektrischen Widerstandes des integrierten Sensorelementes 2 bzw. eines Leiters des integrierten Sensorelementes 2 ausgebildet. Das Sensorelement 2 weist einen meanderförmig ausgebildeten Dehnmessstreifen bzw. einen meanderförmig ausgebildeten leitfähigen Draht auf. Das Sensorelement 2 bzw. der Leiter des Sensorelementes 2 ist nahe der durch Tropfenschlag beanspruchten Oberfläche/Außenseite 3 des Turbinenschaufelblattes 1 angeordnet, wie in Fig. 2 dargestellt. Hierdurch kann das Sensorelement 2 den Erosionsfortschritt an der Oberfläche/Außenseite 3 des Turbinenschaufelblattes 1 aufgrund der Tropfenschlagbeanspruchung kontinuierlich ermitteln. Das Sensorelement 2 ist durch ein Kabel oder kabellos mit einer nicht dargestellten Einrichtung zur direkten Bestimmung des Erosionsfortschritts des Turbinenschaufelblattes 1 verbunden. Die von dem Sensorelement 2 erfassten Messgrößen werden an die Einrichtung weitergeleitet und dort verarbeitet.

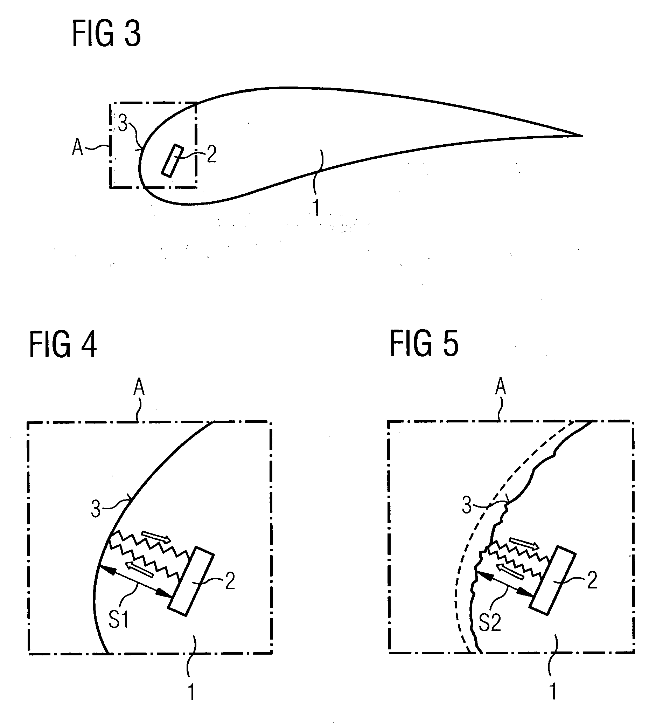

In den Fig. 3 bis 5 ist ein Turbinenschaufelblatt 1 mit einem anderen, zweiten Sensorelement 2 dargestellt. In dieser Ausführungsvariante des Turbinenschaufelblattes 1 ist das Sensorelement 2 zur Aussendung und zum Empfang von Schallwellen zur Bestimmung des Abstandes des Sensorelementes 2 zur Oberfläche 3 des Turbinenschaufelblattes 1 ausgebildet. Das Sensorelement 2 sendet eine Schallwelle in Richtung der Oberfläche 3 des Turbinenschaufelblattes 1 aus. An der Oberfläche 3 wird die Schallwelle reflektiert und zurück zum Sensorelement 2 geführt. Das Sensorelement 2 misst die Zeit zwischen dem Aussenden und dem Empfang der Schallwelle. Je kürzer die gemessene Zeit ist, desto geringer ist der Abstand des Sensorelementes 2 zu der Oberfläche 3 des Turbinenschaufelblattes 1. D.h., über die gemessene Zeit kann der Erosionsfortschritt an der Oberfläche/Außenseite 3 des Turbinenschaufelblattes 1 direkt bestimmt werden. In der Fig. 3 ist die Position des Sensorelementes 2 innerhalb des Turbinenschaufelblattes 1 dargestellt. Dabei wird das Sensorelement 2 nahe dem durch Tropfenschlag beanspruchten Bereich des Turbinenschaufelblattes 1 angeordnet. Die Fig. 4 und 5 zeigen eine vergrößerte Darstellung des in Fig. 2 gestrichelt dargestellten Ausschnittes A. In der Fig. 4 ist die Oberfläche/Außenseite 3 des Turbinenschaufelblattes 1 unbeschädigt. In diesem Normalzustand des Turbinenschaufelblattes 1 ist das Sensorelement 2 mit einem Abstand S1 von der Oberfläche/Außenseite 3 des Turbinenschaufelblattes 1 beanstandet. Die Laufzeit, die die ausgesendete Schallwelle zwischen dem Aussenden und dem Empfang zurückgelegt, wird mit t1 bezeichnet. In der Fig. 5 ist die Oberfläche/Außenseite 3 des Turbinenschaufelblattes 1 durch Tropfenschlag beschädigt bzw. abgetragen. Die von dem Sensorelement 2 gemessene Laufzeit, die die Schallwelle nun zurückgelegt, wird mit S2 bezeichnet. Der Abstand S2 zwischen dem Sensorelement 2 und der erosionsbeschädigten Oberfläche 3 des Turbinenschaufelblattes 1 kann nach der Formel

$$S2 = S1 \times t2 / t1$$

berechnet werden.

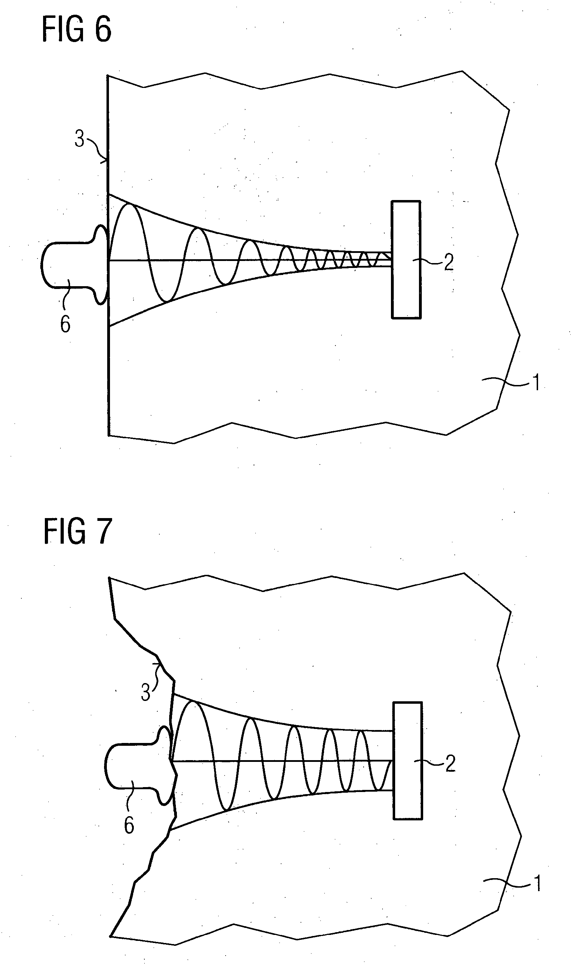

In den Fig. 6 und 7 ist eine Querschnittansicht durch ein Turbinenschaufelblatt 1 mit einem integrierten dritten Sensorelement 2 dargestellt. Aus Fig. 6 ist ersichtlich, dass ein auf die Oberfläche/Außenseite 3 des Turbinenschaufelblattes 1 auftreffender Tropfen 6 eine Stoßwelle auslöst, die von dem Sensorelement 2 erfasst wird. Das Sensorelement 2 ist zur Bestimmung der Amplitude der durch den Tropfenschlag induzierten Stoßwelle ausgebildet. Ferner kann von dem Sensorelement 2 die Frequenz der Stoßwelle ermittelt werden. Je größer der Abstand zwischen der Oberfläche/Außenseite 3 des Turbinenschaufelblattes 1 ist, desto geringer ist die von dem Sensorelement 2 gemessene Amplitude der Stoßwelle. In Fig. 7 ist ein Bereich der Oberfläche/Außenseite 3 des Turbinenschaufelblattes 1 durch die Tropfenschlagbeanspruchung abgetragen, so dass der Abstand zwischen der Oberfläche/Außenseite 3 und dem Sensorelement 2 kleiner ist, als in Fig. 6 dargestellt. Die von dem Tropfen 6 induzierte Stoßwelle weist im Bereich des Sensorelementes 2 in Fig. 7 einen größeren Amplitudenwert auf, als das Sensorelement 2 in Fig. 6 misst. Die Größe des Amplitudenwertes stellt daher ein direktes Maß für den Erosionsfortschritt an dem Turbinenschaufelblatt 1 dar.

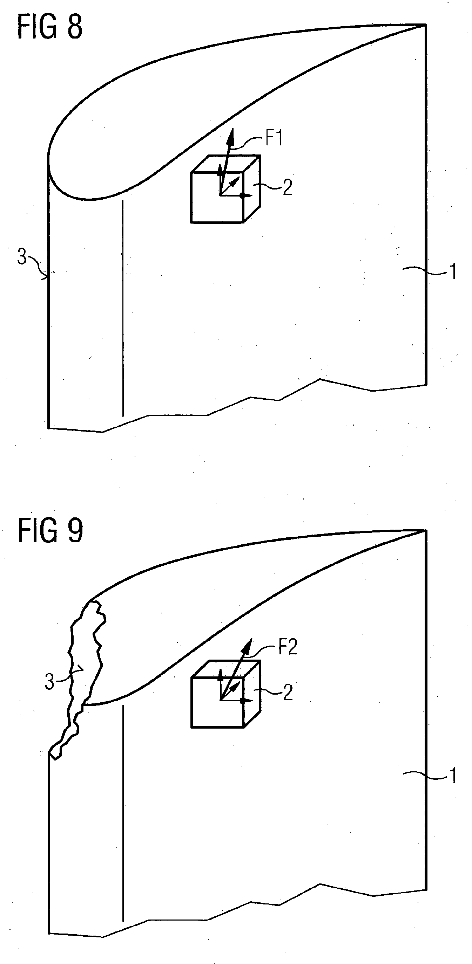

In den Fig. 8 und 9 ist jeweils eine perspektivische Ansicht eines Turbinenschaufelblattes 1 mit einem integrierten vierten Sensorelement 2 dargestellt. Das Sensorelement 2 ist zur Bestimmung der aus der Zentrifugallast resultierenden Kraft und deren Richtung ausgebildet. In einem Ausgangszustand des Turbinenschaufelblattes 1, der in Fig. 8 dargestellt ist, misst das Sensorelement 2 während einer Drehung des Turbinenschaufelblattes 1 eine resultierende Zentrifugallast F1. Diese Zentrifugallast F1 setzt sich zusammen aus der Kraft, die auf das Sensorelement 2 wirkt, sowie der Richtung der Kraft. Kommt es nun aufgrund einer Tropfenschlagbeanspruchung zu einer Erosion an der Oberfläche/Außenseite 3 des Turbinenschaufelblattes 1, wird aufgrund der wirkenden Kräfte das Turbinenschaufelblatt 1 und damit das Sensorelement 2 verformt bzw. verdreht. Ferner verändert sich durch die Erosion die Masse des Turbinenschaufelblattes 1. Dadurch ändert sich sowohl die Kraft, als auch die Richtung mit der die Kraft auf das Sensorelement 2 wirkt. Die resultierende Zentrifugallast F2, bei einem durch Tropfenschlag beschädigen Turbinenschaufelblatt 1, ist in der Fig. 9 dargestellt. Diese Zentrifugallast F2 weist einen anderen Winkel und eine andere resultierende Kraft als die Zentrifugallast F1 gemäß Fig. 8 auf.

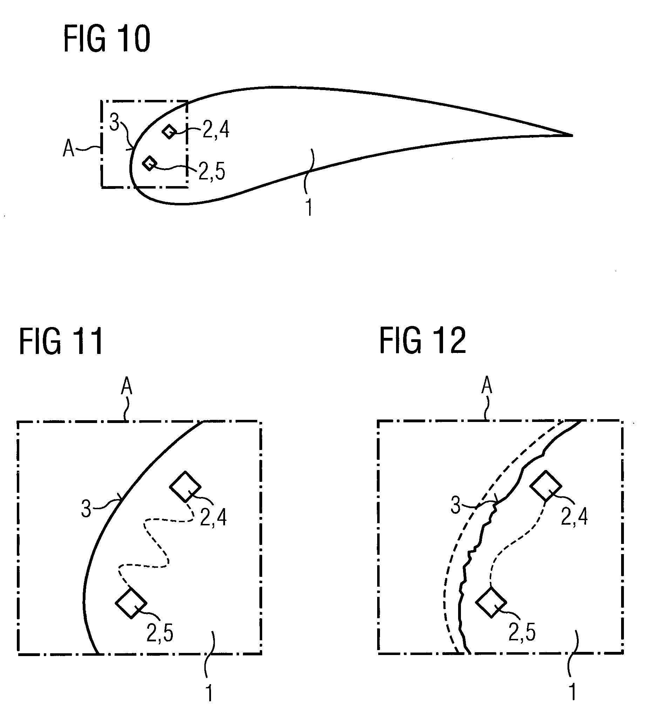

Die Fig. 10 bis 12 zeigen eine Querschnittansicht durch ein Turbinenschaufelblatt 1 mit einem integrierten fünften Sensorelement 2. In dieser Ausführungsvariante des Turbinenschaufelblattes 1 weist das Sensorelement 2 einen Aktor 4 und einen Sensor 5 zur Bestimmung der Amplituden und der Frequenzen lokaler Schwingungsmodi bzw. ausgesendeter Schallwellen zwischen dem Aktor 4 und dem Sensor 5 auf. Der Aktor 4 und der Sensor 5 sind beabstandet, nahe an dem durch Tropfenschlag beanspruchten Bereich des Turbinenschaufelblattes 1, angeordnet. In den Fig. 11 und 12 ist der gestrichelt dargestellte Ausschnitt A vergrößert dargestellt. In Fig. 11 weist das Turbinenschaufelblatt 1 einen Normalzustand auf. Der Sensor 5 empfängt eine von dem Aktor 4 ausgesendete Welle, insbesondere eine akustische Welle, wie eine Schallwelle. Diese Welle weist einen charakteristischen Schwingungsmodus, das heißt eine charakteristische Amplitude und Frequenz, auf. Wird die Oberfläche/Außenseite 3 des Turbinenschaufelblattes 1 durch Tropfenschlag abgetragen, so verändert sich der Abstand des Sensorelementes 2, d.h. des Aktors 4 sowie dessen Sensors 5, zu der Oberfläche/Außenseite 3. Eine erneut ausgesendete Welle weist durch die veränderte Form des Turbinenschaufelblattes 1 einen anderen charakteristischen Schwingungsmodus auf. So verringern sich beispielsweise die Amplitude und die Frequenz einer derartigen Welle, siehe Fig. 12. Diese Veränderung des Schwingungsmodus stellt ein direktes Maß für den Erosionsfortschritt an dem Turbinenschaufelblatt 1 dar.

Die Sensorelemente 2 sind dabei immer in dem durch Erosion beanspruchten Bereich eines Turbinenschaufelblattes 1 angeordnet. Die durch Erosion verringerte Masse eines Turbinenschaufelblattes 1 ändert die Schwerpunktlage des Turbinenschaufelblattes 1 sowie des Sensorelementes 2. Dies führt zu veränderten Schwingformen und zu einer Verschiebung der Eigenfrequenzen, die detektiert werden. Durch Anbringen der Sensorelemente 2 im mehrere Turbinenschaufelblätter 1 kann über die Differenz der gemessenen Signale bzw. der gemessenen Messgrößen Rückschluss auf den Zustand einzelner Turbinenschaufelblätter 1 gezogen werden. Durch die zuvor erwähnten Verfahren sowie die spezielle Ausgestaltung des Turbinenschaufelblattes 1 wird das frühzeitige Erkennen von Schäden an einem Turbinenschaufelblatt 1 ermöglicht. Die Sensorelemente 2 kann für weitere Analysen verwendet werden.

**Patentansprüche**

1.  Turbinenschaufelblatt (1) einer Turbinenschaufel für eine Turbine, **dadurch gekennzeichnet, dass** in einen Turbinenschaufelblattwerkstoff des Turbinenschaufelblattes (1) wenigstens ein Sensorelement (2) zur direkten Bestimmung des Erosionsfortschritts des Turbinenschaufelblattes (1) derart integriert ist, dass das Sensorelement (2) allseitig durch den Turbinenschaufelblattwerkstoff umgeben ist.

2.  Turbinenschaufelblatt (1) nach Anspruch 1, **dadurch gekennzeichnet, dass** das Sensorelement (2) ein Bestandteil einer Einrichtung zur direkten Bestimmung des Erosionsfortschritts des Turbinenschaufelblattes (1) ist.

3.  Turbinenschaufelblatt (1) nach Anspruch 1 oder 2, **dadurch gekennzeichnet, dass** das Sensorelement (2) zur Bestimmung des elektrischen Widerstandes des integrierten Sensorelementes (2) bzw. eines Leiters des integrierten Sensorelementes (2) ausgebildet ist.

4.  Turbinenschaufelblatt (1) nach Anspruch 1 oder 2, **dadurch gekennzeichnet, dass** das Sensorelement (2) zur Aussendung und zum Empfang von Schallwellen zur Bestimmung des Abstandes des Sensorelementes (2) zur Oberfläche (3) des Turbinenschaufelblattes (1) ausgebildet ist.

5.  Turbinenschaufelblatt (1) nach Anspruch 1 oder 2, **dadurch gekennzeichnet, dass** das Sensorelement (2) zur Bestimmung der Amplitude einer durch einen Tropfenschlag induzierten Stoßwelle ausgebildet ist.

6.  Turbinenschaufelblatt (1) nach Anspruch 1 oder 2, **dadurch gekennzeichnet, dass** das Sensorelement (2) zur Bestimmung der aus der Zentrifugallast resultierenden Kraft und deren Richtung ausgebildet ist.

7.  Turbinenschaufelblatt (1) nach Anspruch 1 oder 2, **dadurch gekennzeichnet, dass** das Sensorelement (2) einen Aktor (4) und einen Sensor (5) zur Bestimmung der Amplituden und der Frequenzen lokaler Schwingungsmodi bzw. ausgesendeter Schallwellen zwischen dem Aktor (4) und dem Sensor (5) aufweist.

8.  Turbinenschaufelblatt (1) nach Anspruch 1 oder 2, **dadurch gekennzeichnet, dass** das Sensorelement (2) zur Bestimmung der Eigenschwingungsfrequenzen des Turbinenschaufelblattes (1) ausgebildet ist.

9.  Turbinenschaufelblatt (1) nach einem der vorhergehenden Ansprüche 1 bis 8, **dadurch gekennzeichnet, dass** der Turbinenschaufelblattwerkstoff als Verbundwerkstoff, insbesondere als ein Faserverbundwerkstoff, ausgebildet ist.

10. Turbinenschaufelblatt (1) nach einem der vorhergehenden Ansprüche 1 bis 9, **dadurch gekennzeichnet, dass** das Sensorelement (2) wenigstens einen Piezosensor, wenigstens einen Dehnmessstreifen oder wenigstens einen leitfähigen Draht, insbesondere einen Kupferdraht, aufweist.

11. Turbinenschaufelblatt (1) nach einem der vorhergehenden Ansprüche 1, bis 10, **dadurch gekennzeichnet, dass** das Sensorelement (2) meanderförmig ausgebildet ist.

12. Turbinenschaufel, insbesondere Endstufendampfturbinenschaufel, für eine Turbine, wobei die Turbinenschaufel eine Einheit ist, die mehrere Turbinenschaufelblätter (1) aufweist, **dadurch gekennzeichnet, dass** wenigstens zwei der Turbinenschaufelblätter (1) nach einem der vorhergehenden Ansprüche 1 bis 11 ausgebildet sind und dass eine Vergleichseinrichtung zum Vergleich der Erosionsfortschritte der wenigstens zwei Turbinenschaufelblätter (1) vorgesehen ist.

13. Verfahren zur direkten Bestimmung des Erosionsfortschritts eines Turbinenschaufelblattes (1) einer Turbinenschaufel nach Anspruch 3, **dadurch gekennzeichnet, dass** das Sensorelement (2) wiederholt seinen elektrischen Widerstand bzw. den elektrischen Widerstand eines Leiters des integrierten Sensorelementes (2) misst und dass die elektrischen Widerstände der wiederholten Messungen zur Bestimmung des Erosionsfortschritts des Turbinenschaufelblattes (1) miteinander verglichen werden.

14. Verfahren zur direkten Bestimmung des Erosionsfortschritts eines Turbinenschaufelblattes (1) einer Turbinenschaufel nach Anspruch 4, **dadurch gekennzeichnet, dass** das Sensorelement (2) wiederholt Schallwellen aussendet und die Zeit misst, die eine jede ausgesendete Schallwelle, die an der Oberfläche (3) des Turbinenschaufelblattes (1) reflektiert wird, braucht, bis sie wieder von dem Sensorelement (2) empfangen wird, dass die Abstände des Sensorelementes (2) zu der Oberfläche (3) des Turbinenschaufelblattes (1) durch eine Multiplikation einer jeden gemessenen Zeit mit dem bekannten Abstand des Sensorelementes (2) zu der Oberfläche (3) des Turbinenschaufelblattes (1) in einem Ausgangszustand des Turbinenschaufelblattes (1) und durch eine Division der gemessenen Zeit, die die Schallwelle zwischen dem Aussenden und dem Empfang im Ausgangszustand des Turbinenschaufelblattes (1) benötigt hat, ermittelt werden, und dass anhand der berechneten Abstände der Erosionsfortschritt des Turbinenschaufelblattes (1) bestimmt wird.

15. Verfahren zur direkten Bestimmung des Erosionsfortschritts eines Turbinenschaufelblattes (1) einer Turbinenschaufel nach einem Anspruch 5, **dadurch gekennzeichnet, dass** das Sensorelement (2) wiederholt die Amplitude einer durch einen Tropfenschlag induzierten Stoßwelle ermittelt und dass anhand eines Vergleiches der ermittelten Amplituden der Erosionsfortschritt des Turbinenschaufelblattes (1) bestimmt wird.

16. Verfahren zur direkten Bestimmung des Erosionsfortschritts eines Turbinenschaufelblattes (1) einer Turbinenschaufel nach Anspruch 6, **dadurch gekennzeichnet, dass** das Sensorelement (2) wiederholt die auf das Sensorelement (2) wirkende Zentrifugallast misst und dass anhand jeder gemessenen Zentrifugallast die resultierende Kraft und deren Richtung ermittelt wird und dass durch einen Vergleich der ermittelten resultierenden Kräfte und deren Richtungen der Erosionsfortschritt des Turbinenschaufelblattes (1) bestimmt wird.

17. Verfahren zur direkten Bestimmung des Erosionsfortschritts eines Turbinenschaufelblattes (1) einer Turbinenschaufel nach Anspruch 7, **dadurch gekennzeichnet, dass** der Aktor (4) des Sensorelementes (2) wiederholt Schallwellen aussendet und dass der Sensor (5) des Sensorelementes (2) die Amplituden jeder Schallwelle und die Zeit zwischen dem Auftreffen zweier aufeinanderfolgender Schallwellen ermittelt und dass anhand eines Vergleiches der wiederholt ermittelten Messdaten der Erosionsfortschritt des Turbinenschaufelblättes (1) bestimmt wird.

18. Verfahren zur direkten Bestimmung des Erosionsfortschritts eines Turbinenschaufelblattes (1) einer Turbinenschaufel nach Anspruch 8, **dadurch gekennzeichnet, dass** das Sensorelement (2) die Eigenschwingungsfrequenzen des Turbinenschaufelblattes (1) wiederholt misst und dass anhand eines Vergleiches der ermittelten Eigenschwingungsfrequenzen der Erosionsfortschritt des Turbinenschaufelblattes (1) bestimmt wird.

19. Verfahren zur direkten Bestimmung des Erosionsfortschritts eines Turbinenschaufelblattes (1) einer Turbinenschaufel nach Anspruch 18, **dadurch gekennzeichnet, dass** das Turbinenschaufelblatt (1) nach einem der Ansprüche 9 bis 11 ausgebildet ist.

20. Verfahren zur direkten Bestimmung des Erosionsfortschritts eines Turbinenschaufelblattes (1) einer Turbinenschaufel nach Anspruch 12, **dadurch gekennzeichnet, dass** durch den Vergleich der Erosionsfortschritte wenigstens zweier Turbinenschaufelblätter (1) Rückschlüsse auf den Erosionsfortschritt einzelner Turbinenschaufelblätter (1) gemacht werden.

**Claims**

1. Turbine bucket blade (1) of a turbine bucket for a turbine, **characterised in that** at least one sensor element (2) is integrated into the turbine bucket blade material of the turbine bucket blade (1) for directly determining the progress of erosion of the turbine bucket blade (1), such that the sensor element (2) is surrounded on all sides by the turbine bucket blade material.

2. Turbine bucket blade (1) according to claim 1, **characterised in that** the sensor element (2) is a component part of a device for directly determining the progress of erosion of the turbine bucket blade (1).

3. Turbine bucket blade (1) according to claim 1 or 2, **characterised in that** the sensor element (2) is configured to determine the electrical resistance of the integrated sensor element (2) and/or of a conductor of the integrated sensor element (2).

4. Turbine bucket blade (1) according to claim 1 or 2, **characterised in that** the sensor element (2) is configured to emit and receive sound waves in order to determine the distance of the sensor element (2) from the surface (3) of the turbine bucket blade (1).

5. Turbine bucket blade (1) according to claim 1 or 2, **characterised in that** the sensor element (2) is configured to determine the amplitude of a shock wave induced by a drop impact.

6. Turbine bucket blade (1) according to claim 1 or 2, **characterised in that** the sensor element (2) is configured to determine the force resulting from the centrifugal load as well as the direction of said force.

**7.** Turbine bucket blade (1) according to claim 1 or 2, **characterised in that** the sensor element (2) comprises an actuator (4) and a sensor (5) for determining the amplitudes and the frequencies of local vibration modes and/or emitted sound waves between the actuator (4) and the sensor (5).

**8.** Turbine bucket blade (1) according to claim 1 or 2, **characterised in that** the sensor element (2) is configured to determine the natural vibration frequencies of the turbine bucket blade (1).

**9.** Turbine bucket blade (1) according to one of the preceding claims 1 to 8, **characterised in that** the turbine bucket blade material takes the form of a composite material, in particular a fibre composite.

**10.** Turbine bucket blade (1) according to one of the preceding claims 1 to 9, **characterised in that** the sensor element (2) comprises at least one piezo sensor, at least one strain gauge or at least one conductive wire, in particular a copper wire.

**11.** Turbine bucket blade (1) according to one of the preceding claims 1 to 10, **characterised in that** the sensor element (2) is of a serpentine configuration.

**12.** Turbine bucket, in particular a final-stage steam turbine bucket, for a turbine, wherein the turbine bucket is a unit which comprises a plurality of turbine bucket blades (1), **characterised in that** at least two of the turbine bucket blades (1) are configured according to one of the preceding claims 1 to 11 and a comparison device is provided for comparing the progress of erosion of the at least two turbine bucket blades (1).

**13.** Method of directly determining the progress of erosion of a turbine bucket blade (1) of a turbine bucket according to claim 3, **characterised in that** the sensor element (2) repeatedly measures its electrical resistance and/or the electrical resistance of a conductor of the integrated sensor element (2) and the electrical resistances of the repeated measurements are compared with one another in order to determine the progress of erosion of the turbine bucket blade (1).

**14.** Method of directly determining the progress of erosion of a turbine bucket blade (1) of a turbine bucket according to claim 4, **characterised in that** the sensor element (2) repeatedly emits sound waves and measures the time that each emitted sound wave, which is reflected at the surface (3) of the turbine bucket blade (1), takes to be received again by the sensor element (2), wherein the distances of the sensor element (2) from the surface (3) of the turbine bucket blade (1) are determined by multiplying each measured time by the known distance of the sensor element (2) from the surface (3) of the turbine bucket blade (1) in an initial state of the turbine bucket blade (1) and by dividing the measured time taken by the sound wave between being emitted and received in the initial state of the turbine bucket blade (1), and wherein on the basis of the calculated distances the progress of erosion of the turbine bucket blade (1) is determined.

**15.** Method of directly determining the progress of erosion of a turbine bucket blade (1) of a turbine bucket according to claim 5, **characterised in that** the sensor element (2) repeatedly determines the amplitude of a shock wave induced by a drop impact and on the basis of a comparison of the determined amplitudes the progress of erosion of the turbine bucket blade (1) is determined.

**16.** Method of directly determining the progress of erosion of a turbine bucket blade (1) of a turbine bucket according to claim 6, **characterised in that** the sensor element (2) repeatedly measures the centrifugal load acting upon the sensor element (2) and on the basis of each measured centrifugal load the resultant force and its direction are determined and by means of a comparison of the determined resultant forces and the directions thereof the progress of erosion of the turbine bucket blade (1) is determined.

**17.** Method of directly determining the progress of erosion of a turbine bucket blade (1) of a turbine bucket according to claim 7, **characterised in that** the actuator (4) of the sensor element (2) repeatedly emits sound waves and the sensor (5) of the sensor element (2) determines the amplitudes of each sound wave and the time between the impingement of two successive sound waves and on the basis of a comparison of the repeatedly determined measurement data the progress of erosion of the turbine bucket blade (1) is determined.

**18.** Method of directly determining the progress of erosion of a turbine bucket blade (1) of a turbine bucket according to claim 8, **characterised in that** the sensor element (2) repeatedly measures the natural vibration frequencies of the turbine bucket blade (1) and on the basis of a comparison of the determined natural vibration frequencies the progress of erosion of the turbine bucket blade (1) is determined.

**19.** Method of directly determining the progress of erosion of a turbine bucket blade (1) of a turbine bucket according to claim 18, **characterised in that** the turbine bucket blade (1) is configured according to one of claims 9 to 11.

**20.** Method of directly determining the progress of erosion of a turbine bucket blade (1) of a turbine bucket according to claim 12, **characterised in that** by means of the comparison of the progress of erosion of at least two turbine bucket blades (1) conclusions are drawn about the progress of erosion of individual turbine bucket blades (1).

## Revendications

1. Corps d'aube de turbine (1) d'une aube de turbine pour une turbine, **caractérisé en ce que** dans un matériau de corps d'aube de turbine du corps d'aube de turbine (1) au moins un élément à capteur (2) pour la détermination directe de la progression de l'érosion du corps d'aube de turbine (1) est intégré de telle sorte que l'élément à capteur (2) est entouré de tous les côtés par le matériau de corps d'aube de turbine.

2. Corps d'aube de turbine (1) selon la revendication 1, **caractérisé en ce que** l'élément à capteur (2) est un composant d'un dispositif pour la détermination directe de la progression de l'érosion du corps d'aube de turbine (1).

3. Corps d'aube de turbine (1) selon la revendication 1 ou 2, **caractérisé en ce que** l'élément à capteur (2) est configuré pour la détermination de la résistance électrique de l'élément à capteur (2) intégré ou d'un conducteur de l'élément à capteur (2) intégré.

4. Corps d'aube de turbine (1) selon la revendication 1 ou 2, **caractérisé en ce que** l'élément à capteur (2) est configuré pour l'émission et la réception d'ondes ultrasonores pour la détermination de la distance entre l'élément à capteur (2) et la surface (3) du corps d'aube de turbine (1).

5. Corps d'aube de turbine (1) selon la revendication 1 ou 2, **caractérisé en ce que** l'élément à capteur (2) est configuré pour la détermination de l'amplitude d'une onde de choc induite par un impact de gouttes.

6. Corps d'aube de turbine (1) selon la revendication 1 ou 2, **caractérisé en ce que** l'élément à capteur (2) est configuré pour la détermination de la force résultant d'une charge centrifuge et de sa direction.

7. Corps d'aube de turbine (1) selon la revendication 1 ou 2, **caractérisé en ce que** l'élément à capteur (2) présente un actionneur (4) et un capteur (5) pour la détermination des amplitudes et des fréquences des modes d'oscillation locaux ou des ondes ultrasonores émises entre l'actionneur (4) et le capteur (5).

8. Corps d'aube de turbine (1) selon la revendication 1 ou 2, **caractérisé en ce que** l'élément à capteur (2) est configuré pour la détermination des fréquences d'oscillations propres du corps d'aube de turbine (1).

9. Corps d'aube de turbine (1) selon l'une des revendications précédentes 1 à 8, **caractérisé en ce que** le matériau de corps d'aube de turbine est configuré en tant que matériau composite, en particulier en tant que matériau composite à fibres.

10. Corps d'aube de turbine (1) selon l'une des revendications précédentes 1 à 9, **caractérisé en ce que** l'élément à capteur (2) présente au moins un capteur piézoélectrique, au moins une bande de mesure d'allongement ou au moins un fil conducteur, en particulier un fil de cuivre.

11. Corps d'aube de turbine (1) selon l'une des revendications précédentes 1 à 10, **caractérisé en ce que** l'élément à capteur (2) est configuré en forme de méandre.

12. Aube de turbine, en particulier aube de turbine à vapeur d'étage de sortie, pour une turbine, dans laquelle l'aube de turbine est une unité qui présente plusieurs corps d'aube de turbine (1), **caractérisée en ce qu'**au moins deux des corps d'aube de turbine (1) sont configurés selon l'une des revendications précédentes 1 à 11 et **en ce qu'**un dispositif de comparaison est prévu pour la comparaison de la progression de l'érosion des au moins deux corps d'aube de turbine (1).

13. Procédé pour la détermination directe de la progression de l'érosion d'un corps d'aube de turbine (1) d'une aube de turbine selon la revendication 3, **caractérisé en ce que** l'élément à capteur (2) mesure de manière répétée sa résistance électrique ou la résistance électrique d'un conducteur de l'élément à capteur (2) intégré et **en ce que** les résistances électriques des mesures répétées sont comparées les unes avec les autres pour la détermination de la progression de l'érosion du corps d'aube de turbine (1).

14. Procédé pour la détermination directe de la progression de l'érosion d'un corps d'aube de turbine (1) d'une aube de turbine selon la revendication 4, **caractérisé en ce que** l'élément à capteur (2) émet de manière répétée des ondes ultrasonores et mesure le temps dont a besoin chaque onde ultrasonore émise qui est réfléchie à la surface (3) du corps d'aube de turbine (1) pour être de nouveau reçue par l'élément à capteur (2), **en ce que** les distances entre l'élément à capteur (2) et la surface (3) du corps d'aube de turbine (1) sont déterminées par une multiplication de chaque temps mesuré avec la distance connue de l'élément à capteur (2) par rapport à la surface (3) du corps d'aube de turbine (1) dans un état initial du corps d'aube de turbine (1) et par une division du temps mesuré, qu'il a fallu à l'onde ultrasonore entre l'émission et la réception dans l'état initial du corps d'aube de turbine (1), et **en ce que**, à l'aide des distances calculées, la progression de l'érosion du corps d'aube de turbine (1) est déterminée.

15. Procédé pour la détermination directe de la progression de l'érosion d'un corps d'aube de turbine (1) d'une aube de turbine selon la revendication 5, **caractérisé en ce que** l'élément à capteur (2) détermine de manière répétée l'amplitude d'une onde de choc induite par un impact de gouttes et **en ce que**, à l'aide d'une comparaison des amplitudes déterminées, la progression de l'érosion du corps d'aube de turbine (1) est déterminée.

16. Procédé pour la détermination directe de la progression de l'érosion d'un corps d'aube de turbine (1) d'une aube de turbine selon la revendication 6, **caractérisé en ce que** l'élément à capteur (2) mesure de manière répétée la charge centrifuge agissant sur l'élément à capteur (2) et **en ce que**, à l'aide de chaque charge centrifuge mesurée, la force résultante et son orientation sont déterminées et **en ce que** par une comparaison des forces résultantes déterminées et de leurs orientations la progression de l'érosion du corps d'aube de turbine (1) est déterminée.

17. Procédé pour la détermination directe de la progression de l'érosion d'un corps d'aube de turbine (1) d'une aube de turbine selon la revendication 7, **caractérisé en ce que** l'actionneur (4) de l'élément à capteur (2) émet de manière répétée des ondes ultrasonores et **en ce que** le capteur (5) de l'élément à capteur (2) détermine les amplitudes de chaque onde ultrasonore et le temps entre la rencontre de deux ondes ultrasonores consécutives et **en ce que**, à l'aide d'une comparaison des données de mesures déterminées de manière répétée, la progression de l'érosion du corps d'aube de turbine (1) est déterminée.

18. Procédé pour la détermination directe de la progression de l'érosion d'un corps d'aube de turbine (1) d'une aube de turbine selon la revendication 8, **caractérisé en ce que** l'élément à capteur (2) mesure de manière répétée les fréquences d'oscillations propres du corps d'aube de turbine (1) et **en ce que**, à l'aide d'une comparaison des fréquences d'oscillations propres déterminées, la progression de l'érosion du corps d'aube de turbine (1) est déterminée.

19. Procédé pour la détermination directe de la progression de l'érosion d'un corps d'aube de turbine (1) d'une aube de turbine selon la revendication 18, **ca-**

**ractérisé en ce que** le corps d'aube de turbine (1) est configuré selon l'une des revendications 9 à 11.

20. Procédé pour la détermination directe de la progression de l'érosion d'un corps d'aube de turbine (1) d'une aube de turbine selon la revendication 12, **caractérisé en ce que** par la comparaison de la progression de l'érosion d'au moins deux corps d'aube de turbine (1) des déductions sont faites en ce qui concerne la progression de l'érosion des différents corps d'aube de turbine (1).

FIG 1

FIG 2

# FIG 3

# FIG 4

# FIG 5

## FIG 6

## FIG 7

FIG 8

FIG 9

FIG 10

FIG 11

FIG 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10255009 A1
- WO 2006121570 A2
- EP 1956193 A1
- US 20070139193 A1
- US 4655077 A